(19) Europäisches Patentamt
European Patent Office
Office européen des brevets

(11) **EP 3 944 213 B1**

(12) **EUROPEAN PATENT SPECIFICATION**

(45) Date of publication and mention
of the grant of the patent:
**02.08.2023 Bulletin 2023/31**

(21) Application number: **21207123.7**

(22) Date of filing: **09.11.2021**

(51) International Patent Classification (IPC):
**G08G 1/052** (2006.01)     **G08G 1/08** (2006.01)
**G08G 1/01** (2006.01)     **G08G 1/087** (2006.01)

(52) Cooperative Patent Classification (CPC):
**G08G 1/052; G08G 1/0116; G08G 1/0145;
G08G 1/08; G08G 1/087**

(54) **METHOD, DEVICE, STORAGE MEDIUM AND COMPUTER PROGRAM FOR CONTROLLING TRAFFIC**

VERFAHREN, VORRICHTUNG, SPEICHERMEDIUM UND COMPUTERPROGRAMM ZUR VERKEHRSSTEUERUNG

PROCEDE, DISPOSITIF, SUPPORT DE STOCKAGE ET PROGRAMME INFORMATIQUE POUR CONTROLER LE TRAFIC ROUTIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2020 CN 202011522460**

(43) Date of publication of application:
**26.01.2022 Bulletin 2022/04**

(73) Proprietor: **Apollo Intelligent Connectivity
(Beijing)
Technology Co., Ltd.
Beijing 100176 (CN)**

(72) Inventor: **Dong, Hongyi
Beijing, 100176 (CN)**

(74) Representative: **Hoffmann Eitle
Patent- und Rechtsanwälte PartmbB
Arabellastraße 30
81925 München (DE)**

(56) References cited:
**US-A1- 2015 371 538     US-A1- 2019 088 120**

**Description**

TECHNICAL FIELD

The present disclosure relates to a field of data processing technology, in particular to a field of intelligent transportation technology, and more specifically to a method of controlling traffic, an electronic device, a roadside device, a storage medium, and a program product.

BACKGROUND

In road traffic, traffic lights at an intersection usually illuminate periodically in three colors: red, green and yellow, and each color has constant illumination duration. In related art, the traffic lights may be controlled to allow a fire engine, an ambulance, a bus and other special vehicles to pass through the intersection smoothly, so that the special vehicles may complete tasks in time. However, in the related art, only conditions for the smooth pass of the special vehicles is considered, without taking traffic status at the intersection into account, which may have an impact on the traffic at the intersection.
US2015371538A1 discloses receiving traffic signal priority requests from a vehicle. The number of stopped vehicles at the intersection and on an approach to the intersection is determined in response to receiving each priority request. An activation threshold is computed as a function of an estimated-time-of-arrival (ETA) threshold and the number of stopped vehicles. A vehicle ETA of the vehicle at the intersection is determined in response to each priority request. In response to the vehicle ETA being less than the activation threshold, the priority request is submitted for preemption service processing at the intersection. In response to the vehicle ETA being greater than the activation threshold, submission of the priority request is bypassed for preemption service processing at the intersection.

SUMMARY

The invention is set out by the appended set of claims. The present disclosure provides a method of controlling traffic, an electronic device, a roadside device, a storage medium, and a program product
According to an aspect of the present disclosure, a method of controlling traffic according to claim 1 is provided.
According to another aspect of the present disclosure, an electronic device is provided. The electronic device includes: at least one processor; and a memory communicatively connected to the at least one processor, wherein the memory stores instructions executable by the at least one processor, and the instructions, when executed by the at least one processor, cause the at least one processor to implement the method as described above.
According to another aspect of the present disclosure, a non-transitory computer-readable storage medium having computer instructions stored thereon is provided, wherein the computer instructions allow a computer to implement the method as described above.
According to another aspect of the present disclosure, a roadside device including the electronic device as described above is provided.
According to another aspect of the present disclosure, a computer program product including computer programs is provided, and the computer programs, when executed by a processor, implement the method as described above.
It should be understood that the content described in the summary is not intended to identify key features or important features of the embodiments of the present disclosure, and it is also not intended to limit the scope of the present disclosure. Other features of the present disclosure will become easily understood by the following description.

BRIEF DESCRIPTION OF THE ACCOMPANYING DRAWINGS

The drawings are used to better understand the solution and do not constitute a limitation to the present disclosure, in which:

FIG. 1 schematically shows an application scenario for a method of controlling traffic according to some embodiments of the present disclosure;
FIG. 2 schematically shows a flowchart of a method of controlling traffic according to some embodiments of the present disclosure;
FIG. 3 schematically shows a diagram of a plurality of road monitored images according to some embodiments of the present disclosure;
FIG. 4A schematically shows a diagram of a current road monitored image according to some embodiments of the present disclosure;
FIG. 4B schematically shows a diagram of a three-dimensional bounding box of a target vehicle according to some embodiments of the present disclosure;

FIG. 5 schematically shows a top view of an intersection and lanes according to some embodiments of the present disclosure;

FIG. 6 schematically shows a block diagram of an apparatus of controlling traffic according to some embodiments of the present disclosure; and

FIG. 7 shows a block diagram of an electronic device for implementing a method of controlling traffic according to some embodiments of the present disclosure.

DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope of the present disclosure. In addition, for clarity and conciseness, descriptions of well-known functions and structures are omitted in the following description.

The terms used herein are for the purpose of describing specific embodiments only and are not intended to limit the present disclosure. The terms "comprising", "including", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein may be interpreted to have meanings consistent with the context of this specification, and may not be interpreted in an idealized or too rigid way.

In a case of using an expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

The embodiments of the present disclosure provide a method of controlling traffic, and the method includes: acquiring a pre-estimated driving duration for a target vehicle from a current position to a stop line of an intersection; determining a first change information for traffic lights at the intersection, based on the pre-estimated driving duration; acquiring a traffic status information for an intersecting lane that intersects a lane at which the target vehicle is located; and adjusting the first change information based at least on the traffic status information for the intersecting lane, to obtain a second change information, in response to the traffic status information meeting a preset status condition, so as to control the traffic lights based on the second change information.

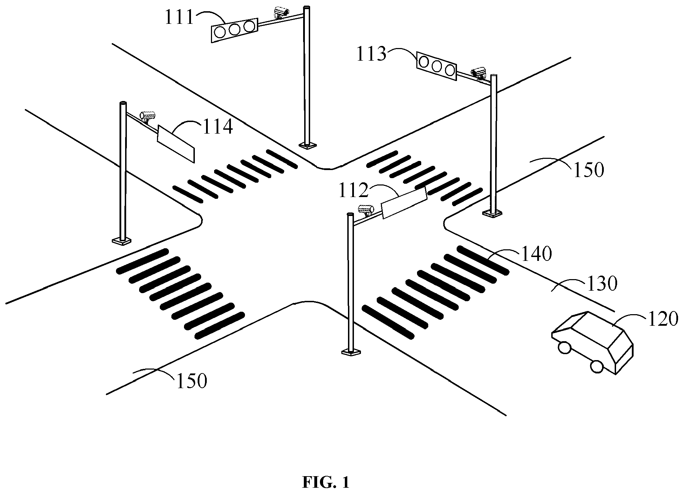

FIG. 1 schematically shows an application scenario for a method of controlling traffic according to some embodiments of the present disclosure.

As shown in FIG. 1, the method of controlling traffic according to the embodiments of the present disclosure may be applied to control traffic lights 111 to 114 at an intersection, for example. Specifically, it is possible to monitor whether there is a fire engine, an ambulance and other target vehicles 120 driving towards the intersection within a predetermined area surrounding the intersection or not. If the target vehicle 120 is driving towards the intersection within the predetermined area surrounding the intersection, a preliminary adjustment scheme for the traffic lights may be determined according to a duration for the target vehicle 120 to reach a stop line 140 of a lane 130 at which the target vehicle 120 is located. Then, the preliminary adjustment scheme may be fine-adjusted according to a traffic status (such as a traffic flow) for an intersecting lane 150 that intersects the lane 130 at which the target vehicle 120 is located, and the fine-adjusted scheme may be used as the adjustment scheme for the traffic lights. Based on the method described above, at least the traffic status for the intersecting lane may be considered when controlling the traffic lights for the target vehicle. In this case, the special vehicle may have no waiting duration at the intersection or the waiting duration may be as short as possible, and an impact on the traffic at the intersection caused by the change on the traffic lights may be reduced.

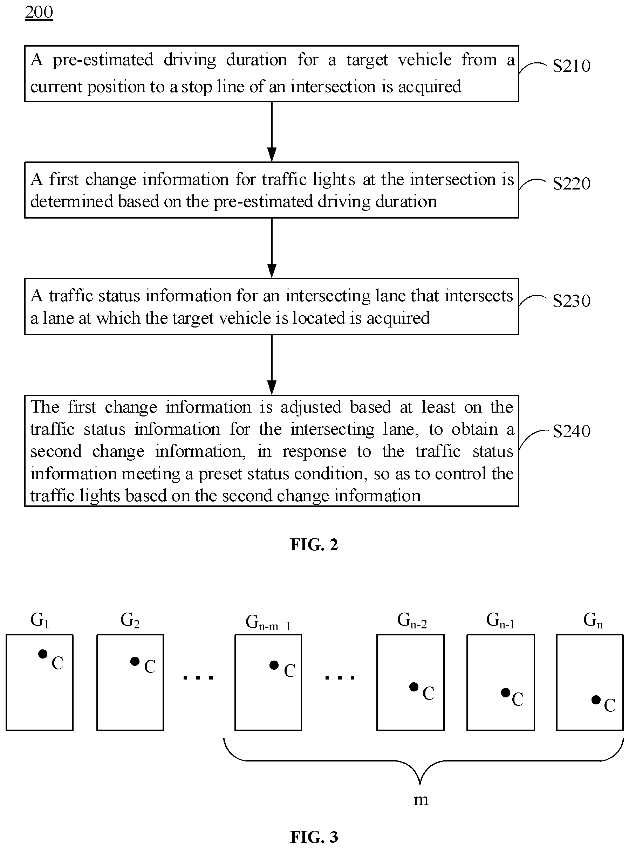

FIG. 2 schematically shows a flowchart of a method of controlling traffic according to some embodiments of the present disclosure.

As shown in FIG. 2, the method 200 of controlling traffic according to the embodiments of the present disclosure may include, for example, operations S210 to S240.

In operation S210, a pre-estimated driving duration for a target vehicle from a current position to a stop line of an intersection is acquired.

In operation S220, a first change information for traffic lights at the intersection is determined based on the pre-estimated driving duration.

In operation S230, a traffic status information for an intersecting lane that intersects a lane at which the target vehicle is located is acquired.

In operation S240, the first change information is adjusted based at least on the traffic status information for the intersecting lane, to obtain a second change information, in response to the traffic status information meeting a preset status condition, so as to control the traffic lights based on the second change information.

According to the embodiments of the present disclosure, the target vehicle may be a fire engine, an ambulance, a bus, a police car and other special vehicles. With reference to FIG. 1 and FIG. 2, whether a target vehicle driving towards the intersection within a predetermined area surrounding the intersection (for example, an area within 150 meters from the intersection) exists or not may be monitored. If the target vehicle 120 is monitored, the pre-estimated driving duration for the target vehicle 120 to reach the stop line 140 may be calculated by using a driving speed of the target vehicle 120 and a distance for the target vehicle 120 to reach the stop line 140 of the lane at which the target vehicle 120 is located.

According to the embodiments of the present disclosure, after obtaining the pre-estimated driving duration for the target vehicle 120 to reach the stop line 140, the first change information for the traffic lights at the intersection may be determined according to the pre-estimated driving duration. For example, change information for the traffic lights 111 and traffic lights 112 in the lane at which the target vehicle 120 is located may be determined according to the pre-estimated driving duration. Then, change information for the traffic lights 113 and traffic lights 114 in a direction intersecting with the traffic lights 111 and traffic lights 112 may be obtained correspondingly according to the change information for the traffic lights 111 and 112. The first change information may be information for altering the traffic lights changed periodically. For example, by altering an illumination color of the traffic lights, increasing illumination duration of the traffic lights or decreasing the illumination duration of the traffic lights, the target vehicle 120 may have sufficient time to pass through the intersection when it reaches the stop line 140.

In some other embodiments of the present disclosure, before performing operation S220, whether the traffic lights 111 and traffic lights 112 are in a green light-on state or not are determined when the target vehicle 120 reaches the stop line 140. If the traffic lights 111 and traffic lights 112 are not in the green light-on state, operation S220 is performed to obtain the first change information.

According to the embodiments of the present disclosure, the traffic status information for the intersecting lane 150 is acquired. If the traffic status information for the intersecting lane indicates that the intersecting lane is in a busy state, the first change information may be fine-adjusted at least according to the traffic status information for the intersecting lane, to obtain the second change information, so that a traffic light control device may control the traffic lights by using the second change information.

According to some other embodiments of the present disclosure, if the traffic status information does not meet the preset status condition (for example, if the traffic status information for the intersecting lane indicates that the intersecting lane is in an idle state), the traffic lights may be controlled directly according to the first change information without fine-adjusting the first change information.

According to the embodiments of the present disclosure, the method of controlling traffic may be performed by a computing device, for example, a road side computing unit (RSCU). After obtaining the change information, the computing device may transmit the change information to a signal light control device, so that the signal light control device may control the traffic lights according to the change information. Alternatively, the method of controlling traffic may be partially performed by the computing device. For example, the computing device may perform operations S210 and S230 to obtain the pre-estimated driving duration and the traffic status information and transmit the pre-estimated driving duration and the traffic status information to the signal light control device, and the signal light control device may perform operations S220 and S240 to obtain the change information.

According to the embodiments of the present disclosure, the traffic status at the intersection is considered when controlling the traffic lights for the target vehicle, so that the special vehicle may have no waiting duration at the intersection or the waiting duration may be as short as possible, and an impact on the traffic at the intersection caused by the change on the traffic lights may be reduced.

According to the embodiments of the present disclosure, acquiring the pre-estimated driving duration for the target vehicle from the current position to the stop line of the intersection includes following operations. (1) Road monitored images are acquired by collecting a road monitored image every predetermined duration. (2) For each of the road monitored images, three-dimensional coordinates of the target vehicle in a three-dimensional space and the driving speed of the target vehicle are determined. (3) If the driving speed of the target vehicle meets a uniform speed condition, the pre-estimated driving duration is determined based on current three-dimensional coordinates of the target vehicle and a current driving speed of the target vehicle determined for a current road monitored image. The driving speed of the target vehicle is determined for the current road monitored image and a plurality of consecutive road monitored images previous to the current road monitored image.

For example, a plurality of monitoring cameras may be provided at the intersection, and the plurality of monitoring cameras may continuously capture (for example, 15 times per second) the road monitored images for each lane within the predetermined area surrounding the intersection. Each of the plurality of monitoring cameras at the intersection may be connected to the computing device. Thus, every time a road monitored image is collected, each of the plurality of monitoring cameras may transmit the road monitored image to the computing device. For each road monitored image newly received, the computing device may perform an image recognition on the image, to recognize obstacles such as vehicles and humans in the image. The computing device may further classify a vehicle as the target vehicle or an ordinary vehicle. More specifically, for example, the target vehicle may be classified as a fire engine, an ambulance, a bus, a police car, etc. In addition, each detected vehicle may be numbered, so that each vehicle corresponds to an ID. The computing device may use a pre-trained detection model for the image recognition, and the detection model, for example, may be a second-order detection model of YOLO (You Only Look Once) v3.

FIG. 3 schematically shows a diagram of a plurality of road monitored images according to some embodiments of the present disclosure.

As shown in FIG. 3, according to the embodiments of the present disclosure, after a target vehicle C is detected in an image $G_1$ captured by a certain monitoring camera, three-dimensional coordinates of the target vehicle C in the three-dimensional space and a driving speed of the target vehicle C may be calculated for each subsequent image captured by the monitoring camera. The driving speed of the target vehicle C is monitored. If driving speeds for a plurality of consecutive images (for example, m images, and m may be a value between 40 and 60) including a current image $G_n$ meet a uniform speed condition, it may be determined that the target vehicle C is in a stable driving state. The uniform speed condition may be considered to be satisfied when differences between driving speeds corresponding to the plurality of consecutive images are less than a predetermined threshold. Then, a distance between the target vehicle C and the stop line may be calculated according to three-dimensional coordinates of the stop line and the three-dimensional coordinates of the target vehicle C corresponding to the current image $G_n$, and a duration for the target vehicle C to reach the stop line may be calculated according to the distance and the driving speed of the target vehicle C corresponding to the current image $G_n$. In the embodiments of the present disclosure, the three-dimensional space may be a three-dimensional space marking spatial positions by using a world coordinate system, and the three-dimensional coordinates may be three-dimensional coordinates in the world coordinate system.

According to the embodiments of the present disclosure, the road monitored image is collected every predetermined duration. The three-dimensional coordinates of the vehicle in the world coordinate system and the speed of the vehicle are calculated according to each road monitored image. If the driving speeds obtained from the plurality of consecutive images are substantially unchanged, the vehicle is considered to be in the uniform speed driving state. The duration for the vehicle to reach the stop line is calculated according to the current three-dimensional position and the driving speed. Based on this method, on the one hand, through observation, it is found that the target vehicle may be in a stable driving state within a certain distance before reaching the stop line, and the target vehicle substantially keeps driving at a uniform speed. Thus, if the duration for the target vehicle to reach the stop line is calculated after the target vehicle enters the stable driving state, the pre-estimated duration may be more accurate. On the other hand, the three-dimensional coordinates of the vehicle in three-dimensional space and the driving speed of the vehicle are calculated according to the images. Thus, it may solve problems such as high cost and difficult implementation caused by a need to install additional communication devices at the vehicle end and a need to transmit operation data by the vehicle in existing technologies. Technical effects such as easy deployment and easy implementation may further be realized.

According to the embodiments of the present disclosure, determining, for each of the road monitored images, the three-dimensional coordinates of the target vehicle in the three-dimensional space and the driving speed of the target vehicle includes following operations. (1) Three-dimensional coordinates of a center point of a three-dimensional bounding box of the target vehicle are determined as the three-dimensional coordinates of the target vehicle, based on the each of the road monitored images and a camera parameter of a monitoring camera for collecting the each of the road monitored images. (2) The driving speed of the target vehicle is determined, based on the three-dimensional coordinates of the target vehicle and a plurality of history three-dimensional coordinates determined according to the plurality of consecutive road monitored images previous to the current road monitored image.

For example, the pre-trained YOLO model may further output a two-dimensional bounding box of each detected vehicle in the image, a length of the vehicle in the three-dimensional space, a width of the vehicle in the three-dimensional space, a height of the vehicle in the three-dimensional space, an orientation angle of the vehicle in the three-dimensional space and other information.

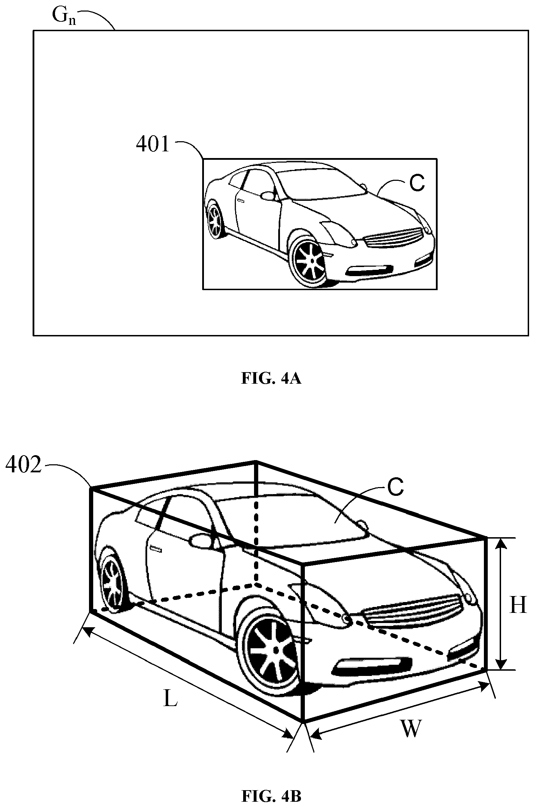

FIG. 4A schematically shows a diagram of a current image according to some embodiments of the present disclosure.

FIG. 4B schematically shows a diagram of a three-dimensional bounding box of a target vehicle according to some embodiments of the present disclosure.

As shown in FIG. 4A and FIG. 4B, taking the current image $G_n$ as an example, the current image is input into the YOLO model. The YOLO model may output a two-dimensional bounding box 401 of the target vehicle C in the current image, a length L of the target vehicle C in the three-dimensional space, a width W of the target vehicle C in the three-dimensional space, a height H of the target vehicle C in the three-dimensional space, an orientation angle of the target vehicle C in the three-dimensional space and other information. A projection point position of a ground point of the target vehicle C on the current image may be determined according to the information described above. The ground point of the target vehicle C may be a feature point on a bottom surface of the three-dimensional bounding box of the target vehicle C, such as a bottom vertex or a bottom center point. Alternatively, the pre-trained YOLO model may predict the projection point position of the ground point of the target vehicle C on the image directly. Since the ground point is a point on the ground, the ground point satisfies a ground equation $ax + by + cz + d = 0$, and $a, b, c$ and d are normal vectors of the ground. Therefore, after determining the projection position of the ground point, three-dimensional coordinates of the ground point may be calculated by combining the ground equation with intrinsic parameters and external parameters of the monitoring camera.

For example, $im_p$ indicates projection point coordinates of the ground point on the image, and a depth (Depth) of the ground point relative to the monitoring camera may be calculated according to following equations (1) and (2).

$$P_{c_{tmp}} = K^{-1} * im_p \qquad (1)$$

$$Depth = -d/(a * \frac{P_{c\_tmp}[0]}{P_{c\_tmp}[2]} + b * \frac{P_{c\_tmp}[1]}{P_{c\_tmp}[2]} + c) \qquad (2)$$

K is an intrinsic parameter matrix for the camera, a, b, c and d are the normal vectors of the ground, and $P_{c_{tmp}}$, $P_{c\_tmp}[0]$, $P_{c\_tmp}[1]$ and $P_{c\_tmp}[2]$ are intermediate variables.

Then, coordinates $P_c$ of the ground point in a camera coordinate system are calculated according to a following equation (3).

$$P_c = K^{-1} * Depth * im_p \qquad (3)$$

Next, three-dimensional coordinates P of the ground point in the world coordinate system are calculated by combining the camera external parameters [R|T] with following equation (4).

$$P = [R|T]^{-1} * P_c \qquad (4)$$

According to the embodiments of the present disclosure, the coordinates of the target vehicle C may be indicated by the coordinates of the center point of the target vehicle C. The coordinates of the center point of the three-dimensional bounding box may be determined according to the three-dimensional coordinates P of the ground point and the length, the width and the height of the three-dimensional bounding box, and the coordinates of the center point of the three-dimensional bounding box may be used as the coordinates of the center point of the target vehicle C.

According to the embodiments of the present disclosure, after obtaining the three-dimensional coordinates of the target vehicle corresponding to each image and several images previous to the each image, the driving speed corresponding to each image may be calculated in combination with a time interval for collecting the images. Taking the current image $G_n$ as an example, the three-dimensional coordinates obtained from the current image $G_n$ may be $P_n$, and three-dimensional coordinates obtained from an image $G_{n-1}$ previous to the image $G_n$ may be $P_{n-1}$. In some embodiments, for example, the driving speed corresponding to the current image $G_n$ may be calculated according to the coordinates $P_n$ and $P_{n-1}$ and a time interval for collecting the image $G_{n-1}$ and the image $G_n$. In some other embodiments, the driving speed may be predicted by using a Kalman filtering algorithm. For example, a current driving speed may be calculated by using the three-dimensional coordinates $P_n$ of the current image $G_n$, the three-dimensional coordinates $P_{n-1}$ of the image $G_{n-1}$ previous to the image $G_n$, and the time interval for collecting the image $G_{n-1}$ and the image $G_n$. A history speed may be predicted by using three-dimensional coordinates of several previous images (such as images $G_{n-2}$ and $G_{n-3}$). Then, a weighted sum is performed on the current speed and the history speed to obtain the driving speed corresponding to the current image $G_n$.

According to the embodiments of the present disclosure, determining the first change information for the traffic lights at the intersection includes following operations. A current illumination signal of the traffic lights and a remaining illumination duration for the current illumination signal are acquired. The first change information is determined based on the current illumination signal, the remaining illumination duration and the pre-estimated driving duration. The first change information includes: increasing the remaining illumination duration or decreasing the remaining illumination duration; and a first change amount.

For example, after the pre-estimated driving duration t1 for the target vehicle to reach the stop line is calculated, a current illumination color and the remaining illumination duration of the traffic lights in the lane at which the target vehicle is located (hereinafter referred to as the current lane) may be detected. Next, it is determined whether, how and how much the traffic lights may be adjusted, according to the pre-estimated driving duration t1 and the remaining illumination duration.

According to the embodiments of the present disclosure, determining the first change information, based on the current illumination signal, the remaining illumination duration and the pre-estimated driving duration includes at least one of following operations. (1) If the current illumination signal is a green light signal, the remaining illumination duration is increased and a first increasing amount is determined based on the remaining illumination duration and the pre-estimated driving duration in a case that the remaining illumination duration is less than the pre-estimated driving duration. (2) If the current illumination signal is a red light signal, the remaining illumination duration is decreased and a first decreasing amount is determined based on the remaining illumination duration and the pre-estimated driving duration in a case that the remaining illumination duration is greater than the pre-estimated driving duration.

For example, if a red light of the traffic lights in the current lane is currently lit, and the remaining duration t2 for the red light is less than or equal to the pre-estimated driving duration t1, the traffic lights may not be adjusted. If the remaining duration t2 for the red light is greater than the pre-estimated driving duration t1, the traffic lights may be adjusted to decrease the remaining duration t2 for the red light to 11, and the first decreasing amount for the red light is s1=t2-t1.

For another example, if a green light of the traffic lights in the current lane is currently lit, and the remaining duration t3 for the green light is greater than the pre-estimated driving duration t1, the traffic lights may not be adjusted. Alternatively, in order to make the target vehicle pass through the intersection smoothly, it may be determined whether the remaining duration t3 for the green light is greater than or equal to t1+a, and a may be a duration between 2s and 5s for example. If the remaining duration t3 for the green light is greater than or equal to t1+a, the traffic lights may not be adjusted. If the remaining duration t3 for the green light is less than t1+a, the traffic lights may be adjusted. The remaining duration t3 for the green light is increased to t1+a, and the first increasing amount for the green light is s2=(t1+a)-t3.

For another example, if a yellow light of the traffic lights in the current lane is currently lit, the yellow light may be considered as a red light. For example, if the remaining duration for the yellow light is t4 and a total duration for the red light is t5, it is considered that the current lit light is equivalent to the red light, and the remaining duration for the red light is t4+ t5.

According to the embodiments of the present disclosure, schemes may be adjusted according to different illumination colors, so that the target vehicle may pass through the intersection smoothly.

According to some embodiments of the present disclosure, the traffic status information includes a traffic flow and/or a vehicle queue length. The preset status condition includes at least one of following conditions. (1) The traffic flow is greater than a preset flow threshold. (2) The vehicle queue length is greater than a preset length threshold. (3) A weighted calculation value of the traffic flow and the vehicle queue length is greater than a preset value.

For example, data in a last period before an appearance moment of the target vehicle C may be used for the traffic flow and the vehicle queue length. Before the target vehicle appears, three lights of the traffic lights are lit periodically. If the red light of the traffic lights is lit when the target vehicle appears, a duration between a time the red light is lit last time and a time the red light is lit this time may be used as a period, and a traffic flow and a vehicle queue length of a corresponding lane in the period may be obtained. The traffic flow of the lane may be a number of vehicles passing through the stop line of the lane in the period, and the vehicle queue length of the lane may be a physical length of the queuing vehicles in the lane when the green light starts to light up in the period.

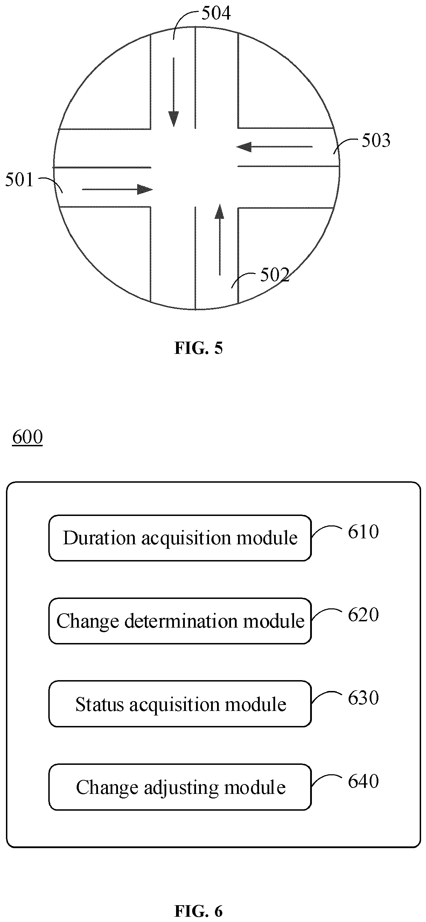

FIG. 5 schematically shows a top view of an intersection and lanes according to some embodiments of the present disclosure.

As shown in FIG. 5, the lanes in the embodiments of the present disclosure are lanes having extending directions towards the intersection, such as lanes 501, 502, 503 and 504. The traffic flow and queuing information for each lane may be monitored in real time. Thus, monitored data may be obtained when a special vehicle is in a lane. If lane 501 is the lane (the current lane) at which the target vehicle is located, intersecting lanes of the lane 501 may include the lanes 502 and 504. A traffic flow of the intersecting lanes may be an average traffic flow of the lanes 502 and 504, and a vehicle queue length of the intersecting lanes may be an average vehicle queue length of the lanes 502 and 504.

According to the embodiments of the present disclosure, the preset flow threshold may be between 20 and 30 vehicles, and the preset length threshold may be between 70 and 80 meters, for example. If both the traffic flow and the vehicle queue length of the intersecting lanes are greater than their corresponding thresholds, it may be determined that the intersecting lanes are busy. Alternatively, if one of the traffic flow and the vehicle queue length of the intersecting lanes is greater than its corresponding threshold, it may be determined that the intersecting lanes are busy. Alternatively, a weighted sum may be performed on the traffic flow and the vehicle queue length of the intersecting lanes. If the weighted sum of the traffic flow and the vehicle queue length of the intersecting lanes are greater than a preset value, it may be determined that the intersecting lanes are busy. When the intersecting lanes are busy, the first change information may be adjusted.

According to the embodiments of the present disclosure, adjusting the first change information based at least on the traffic status information for the intersecting lane includes following operations. The first change information is adjusted based on the traffic status information for the intersecting lane. Alternatively, the first change information is adjusted based on the traffic status information for the intersecting lane and a traffic status information for the lane at which the target vehicle is located.

For example, in some embodiments, a first change scheme may be adjusted according to the traffic status of the intersecting lane, thereby at least reducing the impact on the traffic of the intersecting lane caused by the change on the traffic lights. In some other embodiments, the first change scheme may be adjusted by combining the traffic status of the intersecting lane with the traffic status of the current lane. The traffic adjustment may be more reasonable according to a whole traffic status in both directions at the intersection.

According to some embodiments of the present disclosure, adjusting the first change information based at least on the traffic status information for the intersecting lane to obtain the second change information includes following operations. A first adjusting amount is determined based on the traffic status information for the intersecting lane. The first change amount is adjusted by using the first adjusting amount, so as to obtain a second change amount.

According to the embodiments of the present disclosure, adjusting the first change amount by using the first adjusting amount, so as to obtain the second change amount includes at least one of following operations. If the current illumination signal is the green light signal, the first adjusting amount is subtracted from the first increasing amount to obtain a second increasing amount. If the current illumination signal is the red light signal, the first adjusting amount is subtracted from the first decreasing amount to obtain a second decreasing amount.

For example, if the red light of the traffic lights in the current lane is currently lit, the traffic flow of the intersecting lane is d1, and the vehicle queue length of the intersecting lane is d2, the first adjusting amount may be s3=(d1+d2)/e seconds, and e is an adjustable threshold, such as a value between 5 and 10. In a preliminary scheme, the first decreasing amount for the red light is s1, and the second decreasing amount for the remaining illumination duration for the red light is calculated by subtracting the first adjusting amount s3 from the first decreasing amount s1. The final remaining illumination duration for the red light is t2'= t2-(s1-s3), and s3 may be limited within a certain value range so that the maximum value of s3 is not greater than s1, that is, to ensure that (s1-s3) is a positive value. Then, it is ensured that t2' is less than t2. Based on this, the remaining illumination duration for the red light may be decreased compared with an original remaining illumination duration t2, and the decreasing amount takes the traffic status information for the intersecting lane into account. Within a certain range, the busier the intersecting lane is, the smaller the decreasing amount for the red light in the current lane is, and overall, the remaining illumination duration for the red light is decreased, thereby ensuring that the target vehicle may wait for a short time to pass when reaching the intersection.

For another example, if the green light of the traffic lights in the current lane is currently lit, the traffic flow of the intersecting lane is d1, and the vehicle queue length of the intersecting lane is d2, then the first adjusting amount may be s3=(d1+d2)/e seconds, and e is an adjustable threshold, such as a value between 5 and 10. In a preliminary scheme, the first increasing amount for the green light is s2, and the second increasing amount for the remaining duration for the green light is calculated by subtracting the first adjustment amount s3 from the first increasing amount s2. The final remaining illumination duration for the green light is t3'= t3+(s2-s3)=t1+a-s3. In order to avoid a case that the yellow light of the traffic lights is lit when the target vehicle reaches the intersection, s3 may be within a certain value range so that the maximum value of s3 is not greater than a, that is, to ensure that t3' is greater than the pre-estimated driving duration t1. Based on this, the green light of the traffic lights is on when the target vehicle reaches the intersection, so that the target vehicle may directly pass the intersection. In a certain range, the busier the intersecting lane is, the smaller the increasing amount for the green light in the current lane is.

According to the embodiments of the present disclosure, the adjusting amount may be calculated according to the traffic status of the intersecting lane, and the impact of the traffic status of the intersecting lane on the traffic lights may be quantified. The adjusting amount is subtracted from a preliminary change amount. In a certain range, the busier the intersecting lane is, the smaller the increasing amount for the green light or the decreasing amount for the red light in the current lane is. The value of the adjusting amount is limited to ensure that the target vehicle has no waiting duration or the waiting duration is short when the target vehicle reaches the intersection, so that the target vehicle may pass through the intersection as soon as possible.

If the traffic status of the intersecting lane and the traffic status of the current lane are both taken into account, adjustment may be as follows.

According to some other embodiments of the present disclosure, adjusting the first change information based on the traffic status information for the intersecting lane and the traffic status information for the lane at which the target vehicle is located includes following operations. The first adjusting amount is determined based on the traffic status information for the intersecting lane. The second adjusting amount is determined based on the traffic status information for the lane at which the target vehicle is located. The first change amount is adjusted by using the first adjusting amount and the second adjusting amount, so as to obtain the second change amount.

For example, if the traffic flow of the intersecting lane is d1, and the vehicle queue length of the intersecting lane is d2, the first adjusting amount may be s3=(d1+d2)/e seconds. If the traffic flow of the current lane is d3, and the vehicle queue length of the current lane is d4, the second adjusting amount may be s4=(d3+d4)/e seconds.

If the red light of the traffic lights in the current lane is currently lit, the first adjusting amount s3 may be subtracted from the first decreasing amount s1 obtained in a preliminary scheme, and the second adjusting amount s4 may be added to a result of the subtraction described above. The final remaining illumination duration for the red light is t2"= t2-(s1-s3+s4). The values of s3 and s4 may be limited within a certain value range to ensure that t2" is less than t2, so that the remaining illumination duration for the red light is smaller than an original remaining illumination duration. In a certain range, the busier the intersecting lane is, the smaller the decreasing amount for the red light in the current lane is. The busier the current lane is, the greater the decreasing amount for the red light in the current lane is. A final control result may benefit a busier lane.

If the green light of the traffic lights in the current lane is currently lit, the first adjusting amount s3 may be subtracted from the first increasing amount s2 for the green light obtained in a preliminary scheme, and the second adjusting amount s4 may be added to a result of the subtraction described above. The final remaining illumination duration for the green light is t3"= t3+(s2-s3+s4)=t1+a-s3+s4. The values of s3 and s4 are limited within a certain value range to ensure that t3" is greater than the pre-estimated driving duration t1. Based on this, the green light of the traffic lights is on when the target vehicle reaches the intersection, so that the target vehicle may directly pass the intersection. Moreover, in a certain range, the busier the intersecting lane is, the smaller the increasing amount for the green light in the current lane is. The busier the current lane is, the greater the increasing amount for the green light in the current lane is. The final control result may benefit a busier lane.

According to the embodiments of the present disclosure, the traffic status of the current lane and the traffic status of the intersecting lane are taken into account, so that the final control result benefit the busier lane. The target vehicle may have no waiting duration or the waiting duration may be as short as possible when the target vehicle reaches the intersection.

According to the embodiments of the present disclosure, the method of controlling traffic may further include the following: in a case that at least two candidate vehicles are located within a predetermined area surrounding the intersection, a candidate vehicle that first reaches the stop line is determined, from the at least two candidate vehicles, as the target vehicle.

For example, if two or more target vehicles are within an area surrounding the intersection, a target vehicle to be processed first may be determined according to a time when the target vehicle reaches a stop line of a corresponding lane. The target vehicle that first reaches the stop line is taken as an object to consider. A following target vehicle predicted to reach first is taken as the object to consider after the current target vehicle passes. Based on this, each target vehicle may be precisely controlled to pass as soon as possible.

According to another aspect of the embodiments of the present disclosure, an apparatus of controlling traffic is provided.

FIG. 6 schematically shows a block diagram of an apparatus of controlling traffic according to some embodiments of the present disclosure.

As shown in FIG. 6, the apparatus 600 includes a duration acquisition module 610, a change determination module 620, a status acquisition module 630, and a change adjusting module 640.

The duration acquisition module 610 is used to acquire a pre-estimated driving duration for a target vehicle from a current position to a stop line of an intersection.

The change determination module 620 is used to determine a first change information for traffic lights at the intersection, based on the pre-estimated driving duration.

The status acquisition module 630 is used to acquire a traffic status information for an intersecting lane that intersects a lane at which the target vehicle is located.

The change adjusting module 640 is used to adjust the first change information based at least on the traffic status information for the intersecting lane, to obtain a second change information, in response to the traffic status information meeting a preset status condition, so as to control the traffic lights based on the second change information.

According to the embodiments of the present disclosure, acquiring the pre-estimated driving duration for the target vehicle from the current position to the stop line of the intersection includes following operations. Road monitored images are acquired by collecting a road monitored image every predetermined duration. For each of the road monitored images, three-dimensional coordinates of the target vehicle in a three-dimensional space and the driving speed of the target vehicle are determined. If the driving speed of the target vehicle meets a uniform speed condition, the pre-estimated driving duration is determined based on current three-dimensional coordinates of the target vehicle and a current driving speed of the target vehicle determined for a current road monitored image, and the driving speed of the target vehicle is determined for the current road monitored image and a plurality of consecutive road monitored images previous to the current road monitored image.

According to the embodiments of the present disclosure, determining, for each of the road monitored images, the three-dimensional coordinates of the target vehicle in the three-dimensional space and the driving speed of the target vehicle includes following operations. Three-dimensional coordinates of a center point of a three-dimensional bounding box of the target vehicle are determined as the three-dimensional coordinates of the target vehicle, based on the each of the road monitored images and a camera parameter of a monitoring camera for collecting the each of the road monitored images. The driving speed of the target vehicle is determined, based on the three-dimensional coordinates of the target vehicle and a plurality of history three-dimensional coordinates determined according to the plurality of consecutive road monitored images previous to the current road monitored image.

According to the embodiments of the present disclosure, the traffic status information includes a traffic flow and/or a vehicle queue length. The preset status condition includes at least one of following conditions: the traffic flow is greater than a preset flow threshold; the vehicle queue length is greater than a preset length threshold; and a weighted calculation value of the traffic flow and the vehicle queue length is greater than a preset value.

According to the embodiments of the present disclosure, determining the first change information for the traffic lights at the intersection includes the following operations. A current illumination signal of the traffic lights and a remaining illumination duration for the current illumination signal are acquired. The first change information is determined, based on the current illumination signal, the remaining illumination duration and the pre-estimated driving duration. The first change information includes: increasing the remaining illumination duration or decreasing the remaining illumination duration; and a first change amount.

According to the embodiments of the present disclosure, determining the first change information, based on the current illumination signal, the remaining illumination duration and the pre-estimated driving duration includes at least one of following operations. If the current illumination signal is a green light signal, the remaining illumination duration is increased and a first increasing amount is determined based on the remaining illumination duration and the pre-estimated driving duration in a case that the remaining illumination duration is less than the pre-estimated driving duration. If the current illumination signal is a red light signal, the remaining illumination duration is decreased and a first decreasing amount is determined based on the remaining illumination duration and the pre-estimated driving duration in a case that the remaining illumination duration is greater than the pre-estimated driving duration.

According to the embodiments of the present disclosure, adjusting the first change information based at least on the traffic status information for the intersecting lane includes following operations. The first change information is adjusted based on the traffic status information for the intersecting lane. Alternatively, the first change information is adjusted based on the traffic status information for the intersecting lane and a traffic status information for the lane at which the target vehicle is located.

According to some embodiments of the present disclosure, adjusting the first change information based at least on the traffic status information for the intersecting lane to obtain the second change information includes following operations. A first adjusting amount is determined based on the traffic status information for the intersecting lane. The first change amount is adjusted by using the first adjusting amount, so as to obtain a second change amount.

According to the embodiments of the present disclosure, adjusting the first change amount by using the first adjusting amount, so as to obtain the second change amount includes at least one of following operations. If the current illumination signal is the green light signal, the first adjusting amount is subtracted from the first increasing amount to obtain a second increasing amount. If the current illumination signal is the red light signal, the first adjusting amount is subtracted from the first decreasing amount to obtain a second decreasing amount.

According to some other embodiments of the present disclosure, adjusting the first change information based on the traffic status information for the intersecting lane and the traffic status information for the lane at which the target vehicle is located includes following operations. The first adjusting amount is determined based on the traffic status information for the intersecting lane. The second adjusting amount is determined based on the traffic status information for the lane at which the target vehicle is located. The first change amount is adjusted by using the first adjusting amount and the second adjusting amount, so as to obtain the second change amount.

According to the embodiments of the present disclosure, the apparatus of controlling traffic may further include a target selecting module. The target selecting module is used to determine a candidate vehicle, from at least two candidate vehicles, that first reaches the stop line, as the target vehicle, in a case that the at least two candidate vehicles are located within a predetermined area surrounding the intersection.

According to the embodiments of the present disclosure, the present disclosure further provides an electronic device, a readable storage medium and a computer program product.

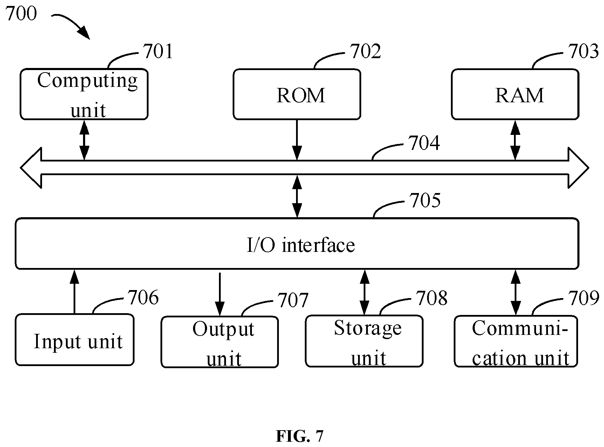

FIG. 7 schematically shows a block diagram of an electronic device 700 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the device 700 includes a computing unit 701, which may execute various appropriate actions and processing according to computer programs stored in a read only memory (ROM) 702 or computer programs loaded into a random access memory (RAM) 703 from a storage unit 708. Various programs and data required for operations of the device 700 may further be stored in the RAM 703. The computing unit 701, the ROM 702 and the RAM 703 are connected to each other through a bus 704. An input/output (I/O) interface 705 is further connected to the bus 704.

A plurality of components in the device 700 are connected to the I/O interface 705, including: an input unit 706, such as a keyboard, a mouse, etc.; an output unit 707, such as various types of displays, speakers, etc.; the storage unit 708, such as a magnetic disk, an optical disk, etc.; and a communication unit 709, such as a network card, a modem, a wireless communication transceiver, etc. The communication unit 709 allows the device 700 to exchange information/data with other devices through a computer network such as the Internet and/or various telecommunication networks.

The computing unit 701 may be various general-purpose and/or special-purpose processing assemblies having processing and computing capabilities. Examples of the computing unit 701 include but are not limited to a central processing unit (CPU), a graphics processing unit (GPU), various special-purpose artificial intelligence (AI) computing chips, various computing units running machine learning model algorithms, digital signal processing (DSP), and any appropriate processor, controller, microcontroller, etc. The computing unit 701 implements the various methods and processes described above, for example, the method of controlling traffic. For example, in some embodiments, the method of controlling traffic may be implemented as computer software programs, which is tangibly contained in a machine-readable medium, such as the storage unit 708. In some embodiments, part of the computer programs or all of the computer programs may be loaded and/or installed on the device 700 via the ROM 702 and/or the communication unit 709. When the computer programs are loaded into the RAM 703 and executed by the computing unit 701, one or more operations of the method of controlling traffic described above may be executed. Alternatively, in other embodiments, the computing unit 701 may be configured to implement the method of controlling traffic in any other suitable manner (for example, by means of firmware).

Various implementations of the systems and technologies described above may be implemented in digital electronic circuit systems, integrated circuit systems, field programmable gate arrays (FPGA), application specific integrated circuits (ASIC), application-specific standard products (ASSP), systems on a chip (SOC), complex programmable logic devices (CPLD), computer hardware, firmware, software, and/or a combination thereof. These various embodiments may include: the systems and technologies being implemented in one or more computer programs. The one or more computer programs may be executed and/or interpreted on a programmable system including at least one programmable processor. The programmable processor may be a special-purpose programmable processor or a general-purpose programmable processor that may receive data and instructions from a storage system, at least one input device, and at least one output device, and may transmit data and instructions to a storage system, at least one input device, and at least one output device.

Program codes for implementing the method of the present disclosure may be written in any combination of one or more programming languages. These program codes may be provided to processors or controllers of general-purpose computers, special-purpose computers, or other programmable data processing devices, so that the program codes, when executed by the processors or controllers, implement the functions/operations specified in the flowcharts and/or block diagrams. The program codes may be executed on a machine entirely, executed on a machine partly, executed on a machine partly as an independent software package and executed on a remote machine partly, or executed on a remote machine or server entirely.

In the context of the present disclosure, the machine-readable medium may be a tangible medium, which may contain or store programs used by an instruction execution system, an instruction execution apparatus, or an instruction execution device or used in combination with the instruction execution system, the instruction execution apparatus, or the instruction execution device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include electrical connections based on one or more wires, portable computer disks, hard disks, random access memories (RAM), read only memories (ROM), erasable programmable read only memories (EPROM or flash memory), optical fibers, portable compact disk read only memory (CD-ROM), optical storage device, magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the systems and technologies described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

According to the embodiments of the present disclosure, the present disclosure further provides a roadside device including the electronic device described above.

In the embodiments of the present disclosure, the roadside device may further include communication components in addition to the electronic device. The electronic device may be integrated with the communication components. Alternatively, the electronic device and the communication components may be provided separately. The electronic device may acquire data (such as pictures and videos) from a sensing device (such as a roadside camera) to perform video processing and data calculating.

According to the embodiments of the present disclosure, the present disclosure further provides a cloud control platform including the electronic device described above.

In the embodiments of the present disclosure, the cloud control platform implements processing in the cloud. The electronic device included in the cloud control platform may acquire data (such as pictures and videos) from a sensing device (such as a roadside camera) to perform video processing and data calculating. The cloud control platform may further referred to as a vehicle-road collaborative management platform, an edge computing platform, a cloud computing platform, a central system, a cloud server, etc.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors.

**Claims**

1.   A method of controlling traffic, comprising:

   acquiring (S210) a pre-estimated driving duration for a target vehicle from a current position to a stop line of an intersection;
   determining (S220) a first change information for traffic lights at the intersection, based on the pre-estimated driving duration;
   acquiring (S230) a traffic status information for an intersecting lane that intersects a lane at which the target vehicle is located; and
   adjusting (S240) the first change information based at least on the traffic status information for the intersecting lane, to obtain a second change information, in response to the traffic status information meeting a preset status condition, so as to control the traffic lights based on the second change information,
   **characterized in that** the acquiring (S210) a pre-estimated driving duration for a target vehicle from a current position to a stop line of an intersection comprises:
   acquiring road monitored images by collecting a road monitored image every predetermined duration;
   determining, for each of the road monitored images, three-dimensional coordinates of the target vehicle in a three-dimensional space and a driving speed of the target vehicle; and
   determining the pre-estimated driving duration based on current three-dimensional coordinates of the target vehicle and a current driving speed of the target vehicle determined for a current road monitored image, in response to the driving speed of the target vehicle meeting a uniform speed condition, wherein the driving speed of the target vehicle is determined for the current road monitored image and a plurality of consecutive road monitored images previous to the current road monitored image.

2.   The method of claim 1, wherein the determining, for each of the road monitored images, three-dimensional coordinates of the target vehicle in a three-dimensional space and a driving speed of the target vehicle comprises: for each of the road monitored images,

> determining three-dimensional coordinates of a center point of a three-dimensional bounding box of the target vehicle as the three-dimensional coordinates of the target vehicle, based on the each of the road monitored images and a camera parameter of a monitoring camera for collecting the each of the road monitored images; and determining the driving speed of the target vehicle, based on the three-dimensional coordinates of the target vehicle and a plurality of history three-dimensional coordinates determined according to the plurality of consecutive road monitored images previous to the current road monitored image.

3. The method of any one of preceding claims, wherein the traffic status information comprises a traffic flow and/or a vehicle queue length, and wherein the preset status condition comprises at least one of:

> the traffic flow being greater than a preset flow threshold;
> the vehicle queue length being greater than a preset length threshold; and
> a weighted calculation value of the traffic flow and the vehicle queue length being greater than a preset value.

4. The method of any one of preceding claims, wherein the determining a first change information for traffic lights at the intersection comprises:

> acquiring a current illumination signal of the traffic lights and a remaining illumination duration for the current illumination signal; and
> determining the first change information, based on the current illumination signal, the remaining illumination duration and the pre-estimated driving duration, wherein the first change information comprises: increasing the remaining illumination duration or decreasing the remaining illumination duration; and a first change amount.

5. The method of claim 4, wherein the determining the first change information, based on the current illumination signal, the remaining illumination duration and the pre-estimated driving duration comprises at least one of:

> if the current illumination signal is a green light signal, increasing the remaining illumination duration and determining a first increasing amount based on the remaining illumination duration and the pre-estimated driving duration in response to the remaining illumination duration being less than the pre-estimated driving duration; and
> if the current illumination signal is a red light signal, decreasing the remaining illumination duration and determining a first decreasing amount based on the remaining illumination duration and the pre-estimated driving duration in response to the remaining illumination duration being greater than the pre-estimated driving duration.

6. The method of any one of preceding claims, wherein the adjusting the first change information based at least on the traffic status information for the intersecting lane comprises:

> adjusting the first change information based on the traffic status information for the intersecting lane; or
> adjusting the first change information based on the traffic status information for the intersecting lane and a traffic status information for the lane at which the target vehicle is located.

7. The method of any one of preceding claims, wherein the adjusting the first change information based at least on the traffic status information for the intersecting lane to obtain a second change information comprises:

> determining a first adjusting amount based on the traffic status information for the intersecting lane; and
> adjusting the first change amount by using the first adjusting amount, so as to obtain a second change amount.

8. The method of claim 7, wherein the adjusting the first change amount by using the first adjusting amount, so as to obtain a second change amount comprises at least one of:

> if the current illumination signal is the green light signal, subtracting the first adjusting amount from the first increasing amount to obtain a second increasing amount; and
> if the current illumination signal is the red light signal, subtracting the first adjusting amount from the first decreasing amount to obtain a second decreasing amount.

9. The method of claim 6, wherein the adjusting the first change information based on the traffic status information for the intersecting lane and a traffic status information for the lane at which the target vehicle is located comprises:

determining a first adjusting amount based on the traffic status information for the intersecting lane;
determining a second adjusting amount based on the traffic status information for the lane at which the target vehicle is located; and
adjusting the first change amount by using the first adjusting amount and the second adjusting amount, so as to obtain a second change amount.

10. The method of any one of preceding claims, further comprising:
determining a candidate vehicle, from at least two candidate vehicles, that first reaches the stop line, as the target vehicle, in response to the at least two candidate vehicles being located within a predetermined area surrounding the intersection.

11. An electronic device (700), comprising:

at least one processor; and
a memory communicatively connected to the at least one processor, wherein the memory stores instructions executable by the at least one processor, and the instructions, when executed by the at least one processor, cause the at least one processor to implement the method of any one of claims 1 to 10.

12. A non-transitory computer-readable storage medium having computer instructions stored thereon, wherein the computer instructions, when executed by a processor, cause a computer to implement the method of any one of claims 1 to 10.

13. A roadside device, comprising the electronic device of claim 11.

14. A computer program product containing a computer program, wherein the computer program, when executed by a processor, causes the processor to implement the method of any one of claims 1 to 10.

**Patentansprüche**

1. Verfahren zum Steuern von Verkehr, umfassend:

Erfassen (S210) einer vorausgeschätzten Fahrdauer für ein Zielfahrzeug von einer aktuellen Position zu einer Haltelinie einer Kreuzung;
Bestimmen (S220) einer ersten Änderungsinformation für Verkehrsampeln an der Kreuzung, basierend auf der vorausgeschätzten Fahrdauer;
Erfassen (S230) einer Verkehrszustandsinformation für eine kreuzende Fahrspur, die eine Fahrspur kreuzt, auf der sich das Zielfahrzeug befindet; und
Anpassen (S240) der ersten Änderungsinformation zumindest basierend auf der Verkehrszustandsinformation für die kreuzende Fahrspur, um eine zweite Änderungsinformation zu erhalten, in Reaktion darauf, dass die Verkehrszustandsinformation eine voreingestellte Zustandsbedingung erfüllt, um die Verkehrsampel basierend auf der zweiten Änderungsinformation zu steuern,
**dadurch gekennzeichnet, dass**
das Erfassen (S210) einer vorausgeschätzten Fahrdauer für ein Zielfahrzeug von einer aktuellen Position zu einer Haltelinie einer Kreuzung umfasst:

Erfassen von straßenüberwachten Bildern durch Sammeln eines straßenüberwachten Bildes für jede vorbestimmte Dauer;
Bestimmen, für jedes der straßenüberwachten Bilder, dreidimensionaler Koordinaten des Zielfahrzeugs in einem dreidimensionalen Raum und einer Fahrgeschwindigkeit des Zielfahrzeugs; und Bestimmen der vorausgeschätzten Fahrdauer basierend auf aktuellen dreidimensionalen Koordinaten des Zielfahrzeugs und einer aktuellen Fahrgeschwindigkeit des Zielfahrzeugs, die für ein aktuelles straßenüberwachtes Bild bestimmt wird, als Reaktion darauf, dass die Fahrgeschwindigkeit des Zielfahrzeugs eine gleichförmige Geschwindigkeitsbedingung erfüllt, wobei die Fahrgeschwindigkeit des Zielfahrzeugs für das aktuelle straßenüberwachte Bild und eine Vielzahl von aufeinanderfolgenden straßenüberwachten Bildern vor dem aktuellen straßenüberwachten Bild bestimmt wird.

2. Verfahren nach Anspruch 1, wobei das Bestimmen, für jedes der straßenüberwachten Bilder, dreidimensionaler Koordinaten des Zielfahrzeugs in einem dreidimensionalen Raum und einer Fahrgeschwindigkeit des Zielfahrzeugs umfasst:

   für jedes der straßenüberwachten Bilder,

   Bestimmen dreidimensionaler Koordinaten eines Mittelpunkts eines dreidimensionalen Begrenzungsrahmens des Zielfahrzeugs als die dreidimensionalen Koordinaten des Zielfahrzeugs basierend auf jedem der straßenüberwachten Bilder und einem Kameraparameter einer Überwachungskamera zum Sammeln jedes der straßenüberwachten Bilder; und

   Bestimmen der Fahrgeschwindigkeit des Zielfahrzeugs basierend auf den dreidimensionalen Koordinaten des Zielfahrzeugs und einer Vielzahl von dreidimensionalen Verlaufskoordinaten, die gemäß der Vielzahl von aufeinanderfolgenden straßenüberwachten Bildern vor dem aktuellen straßenüberwachten Bild bestimmt wurden.

3. Verfahren nach einem der vorhergehenden Ansprüche, wobei die Verkehrszustandsinformation einen Verkehrsfluss und/oder eine Fahrzeugschlangenlänge umfasst, und wobei die voreingestellte Zustandsbedingung mindestens eines von Folgendem umfasst:

   der Verkehrsfluss ist größer als ein voreingestellter Fluss-Schwellenwert;

   die Fahrzeugschlangenlänge ist größer als ein voreingestellter Längen-Schwellenwert; und

   ein gewichteter Berechnungswert des Verkehrsflusses und der Fahrzeugschlangenlänge ist größer als ein voreingestellter Wert.

4. Verfahren nach einem der vorhergehenden Ansprüche, wobei das Bestimmen einer ersten Änderungsinformation für Verkehrsampeln an der Kreuzung umfasst:

   Erfassen eines aktuellen Beleuchtungssignals der Verkehrsampel und einer verbleibenden Beleuchtungsdauer für das aktuelle Beleuchtungssignal; und

   Bestimmen der ersten Änderungsinformation, basierend auf dem aktuellen Beleuchtungssignal, der verbleibenden Beleuchtungsdauer und der vorausgeschätzten Fahrdauer, wobei die erste Änderungsinformation umfasst: Erhöhen der verbleibenden Beleuchtungsdauer oder Verringern der verbleibenden Beleuchtungsdauer; und einen ersten Änderungsbetrag.

5. Verfahren nach Anspruch 4, wobei das Bestimmen der ersten Änderungsinformation basierend auf dem aktuellen Beleuchtungssignal, der verbleibenden Beleuchtungsdauer und der vorausgeschätzten Fahrdauer mindestens eines von Folgendem umfasst:

   falls das aktuelle Beleuchtungssignal ein Grünlichtsignal ist, Erhöhen der verbleibenden Beleuchtungsdauer und Bestimmen eines ersten Erhöhungsbetrags basierend auf der verbleibenden Beleuchtungsdauer und der vorausgeschätzten Fahrdauer als Reaktion darauf, dass die verbleibende Beleuchtungsdauer geringer als die vorausgeschätzte Fahrdauer ist; und

   falls das aktuelle Beleuchtungssignal ein Rotlichtsignal ist, Verringern der verbleibenden Beleuchtungsdauer und Bestimmen eines ersten Verringerungsbetrags basierend auf der verbleibenden Beleuchtungsdauer und der vorausgeschätzten Fahrdauer als Reaktion darauf, dass die verbleibende Beleuchtungsdauer größer als die vorausgeschätzte Fahrdauer ist.

6. Verfahren nach einem der vorhergehenden Ansprüche, wobei das Anpassen der ersten Änderungsinformation zumindest basierend auf der Verkehrszustandsinformation für die kreuzende Fahrspur Folgendes umfasst:

   Anpassen der ersten Änderungsinformation basierend auf der Verkehrszustandsinformation für die kreuzende Fahrspur; oder

   Anpassen der ersten Änderungsinformation basierend auf der Verkehrszustandsinformation für die kreuzende Fahrspur und einer Verkehrszustandsinformation für die Fahrspur, auf der sich das Zielfahrzeug befindet.

7. Verfahren nach einem der vorhergehenden Ansprüche, wobei das Anpassen der ersten Änderungsinformation zumindest basierend auf der Verkehrszustandsinformation für die kreuzende Fahrspur, um eine zweite Änderungsinformation zu erhalten, umfasst:

   Bestimmen eines ersten Anpassungsbetrags basierend auf der Verkehrszustandsinformation für die kreuzende Fahrspur; und

Anpassen des ersten Änderungsbetrags unter Verwendung des ersten Anpassungsbetrags, um einen zweiten Änderungsbetrag zu erhalten.

8.  Verfahren nach Anspruch 7, wobei das Anpassen des ersten Änderungsbetrags unter Verwendung des ersten Anpassungsbetrags, um einen zweiten Änderungsbetrag zu erhalten, mindestens eines von Folgendem umfasst: falls das aktuelle Beleuchtungssignal das Grünlichtsignal ist, Subtrahieren des ersten Anpassungsbetrags von dem ersten Erhöhungsbetrag, um einen zweiten Erhöhungsbetrag zu erhalten; und falls das aktuelle Beleuchtungssignal das Rotlichtsignal ist, Subtrahieren des ersten Anpassungsbetrags von dem ersten Verringerungsbetrag, um einen zweiten Verringerungsbetrag zu erhalten.

9.  Verfahren nach Anspruch 6, wobei das Anpassen der ersten Änderungsinformation basierend auf der Verkehrszustandsinformation für die kreuzende Fahrspur und einer Verkehrszustandsinformation für die Fahrspur, auf der sich das Zielfahrzeug befindet, umfasst:

Bestimmen eines ersten Anpassungsbetrags basierend auf der Verkehrszustandsinformation für die kreuzende Fahrspur;
Bestimmen eines zweiten Anpassungsbetrags basierend auf der Verkehrszustandsinformation für die Fahrspur, auf der sich das Zielfahrzeug befindet; und
Anpassen des ersten Änderungsbetrags unter Verwendung des ersten Anpassungsbetrags und des zweiten Anpassungsbetrags, um einen zweiten Änderungsbetrag zu erhalten.

10. Verfahren nach einem der vorhergehenden Ansprüche, weiter umfassend:
Bestimmen eines Kandidatenfahrzeugs aus mindestens zwei Kandidatenfahrzeugen, das als erstes die Haltelinie erreicht, als das Zielfahrzeug in Reaktion darauf, dass sich die mindestens zwei Kandidatenfahrzeuge innerhalb eines vorbestimmten Bereichs befinden, der die Kreuzung umgibt.

11. Elektronische Vorrichtung (700), umfassend:

mindestens einen Prozessor; und
einen Speicher, der kommunikativ mit dem mindestens einen Prozessor verbunden ist, wobei der Speicher Anweisungen speichert, die von dem mindestens einen Prozessor ausgeführt werden können, und die Anweisungen, wenn sie von dem mindestens einen Prozessor ausgeführt werden, den mindestens einen Prozessor veranlassen, das Verfahren nach einem der Ansprüche 1 bis 10 zu implementieren.

12. Nicht-transitorisches, computerlesbares Speichermedium, auf dem Computeranweisungen gespeichert sind, wobei die Computeranweisungen, wenn sie von einem Prozessor ausgeführt werden, einen Computer veranlassen, das Verfahren nach einem der Ansprüche 1 bis 10 zu implementieren.

13. Straßenrandvorrichtung, umfassend die elektronische Vorrichtung nach Anspruch 11.

14. Computerprogrammprodukt, das ein Computerprogramm enthält, wobei das Computerprogramm, wenn es von einem Prozessor ausgeführt wird, den Prozessor veranlasst, das Verfahren nach einem der Ansprüche 1 bis 10 zu implementieren.

**Revendications**

1.  Procédé de contrôle de trafic, comprenant :

l'acquisition (S210) d'une durée de conduite pré-estimée pour un véhicule cible à partir d'une position actuelle jusqu'à une ligne d'arrêt d'une intersection ;
la détermination (S220) d'une première information de changement de feux de signalisation au niveau de l'intersection, sur la base de la durée de conduite pré-estimée ;
l'acquisition (S230) d'une information d'état de trafic pour une voie d'intersection qui coupe une voie au niveau de laquelle est situé le véhicule cible ; et
l'ajustement (S240) de la première information de changement sur la base au moins de l'information d'état de trafic pour la voie d'intersection, pour obtenir une deuxième information de changement, en réponse au fait que l'information d'état de trafic satisfait à une condition d'état prédéfinie, de manière à contrôler les feux de signalisation sur la base de la deuxième information de changement,

**caractérisé en ce que**

l'acquisition (S210) d'une durée de conduite pré-estimée pour un véhicule cible à partir d'une position actuelle jusqu'à une ligne d'arrêt d'une intersection comprend :

l'acquisition d'images surveillées de route en collectant une image surveillée de route à chaque durée prédéterminée ;

la détermination, pour chacune des images surveillées de route, de coordonnées tridimensionnelles du véhicule cible dans un espace tridimensionnel et d'une vitesse de conduite du véhicule cible ; et la détermination de la durée de conduite pré-estimée sur la base de coordonnées tridimensionnelles actuelles du véhicule cible et d'une vitesse de conduite actuelle du véhicule cible déterminées pour une image surveillée de route actuelle, en réponse au fait que la vitesse de conduite du véhicule cible satisfait à une condition de vitesse uniforme, dans lequel la vitesse de conduite du véhicule cible est déterminée pour l'image surveillée de route actuelle et une pluralité d'images surveillées de route consécutives avant l'image surveillée de route actuelle.

**2.** Procédé selon la revendication 1, dans lequel la détermination, pour chacune des images surveillées de route, de coordonnées tridimensionnelles du véhicule cible dans un espace tridimensionnel et d'une vitesse de conduite du véhicule cible comprend : pour chacune des images surveillées de route,

la détermination de coordonnées tridimensionnelles d'un point central d'un cadre de délimitation tridimensionnel du véhicule cible en tant que coordonnées tridimensionnelles du véhicule cible, sur la base de chacune des images surveillées de route et d'un paramètre de caméra d'une caméra de surveillance pour collecter chacune des images surveillées de route ; et

la détermination de la vitesse de conduite du véhicule cible, sur la base des coordonnées tridimensionnelles du véhicule cible et d'une pluralité de coordonnées tridimensionnelles historiques déterminées en fonction de la pluralité d'images surveillées de route consécutives avant l'image surveillée de route actuelle.

**3.** Procédé selon l'une quelconque des revendications précédentes, dans lequel l'information d'état de trafic comprend un flux de trafic et/ou une longueur de file de véhicules, et dans lequel la condition d'état prédéfinie comprend au moins un élément parmi :

le flux de trafic étant supérieur à un seuil de flux prédéfini ;

la longueur de file de véhicules étant supérieure à un seuil de longueur prédéfini ; et

une valeur de calcul pondérée du flux de trafic et de la longueur de file de véhicules étant supérieure à une valeur prédéfinie.

**4.** Procédé selon l'une quelconque des revendications précédentes, dans lequel la détermination d'une première information de changement pour les feux de signalisation au niveau de l'intersection comprend :

l'acquisition d'un signal d'éclairage actuel des feux de signalisation et d'une durée d'éclairage restante pour le signal d'éclairage actuel ; et

la détermination de la première information de changement, sur la base du signal d'éclairage actuel, de la durée d'éclairage restante et de la durée de conduite pré-estimée, dans lequel la première information de changement comprend : l'augmentation de la durée d'éclairage restante ou la diminution de la durée d'éclairage restante ; et d'une première quantité de changement.

**5.** Procédé selon la revendication 4, dans lequel la détermination de la première information de changement, sur la base du signal d'éclairage actuel, de la durée d'éclairage restante et de la durée de conduite pré-estimée comprend au moins un élément parmi :

si le signal d'éclairage actuel est un signal lumineux vert, l'augmentation de la durée d'éclairage restante et la détermination d'une première quantité d'augmentation sur la base de la durée d'éclairage restante et de la durée de conduite pré-estimée en réponse au fait que la durée d'éclairage restante est inférieure à la durée de conduite pré-estimée ; et

si le signal d'éclairage actuel est un signal lumineux rouge, la diminution de la durée d'éclairage restante et la détermination d'une première quantité de diminution sur la base de la durée d'éclairage restante et de la durée de conduite pré-estimée en réponse au fait que la durée d'éclairage restante est supérieure à la durée de conduite pré-estimée.

6. Procédé selon l'une quelconque des revendications précédentes, dans lequel l'ajustement de la première information de changement sur la base au moins de l'information d'état de trafic pour la voie d'intersection comprend :

l'ajustement de la première information de changement sur la base de l'information d'état de trafic pour la voie d'intersection ; ou

l'ajustement de la première information de changement sur la base de l'information d'état de trafic pour la voie d'intersection et d'une information d'état de trafic pour la voie au niveau de laquelle se situe le véhicule cible.

7. Procédé selon l'une quelconque des revendications précédentes, dans lequel l'ajustement de la première information de changement sur la base au moins de l'information d'état de trafic pour la voie d'intersection pour obtenir une deuxième information de changement comprend :

la détermination d'une première quantité d'ajustement sur la base de l'information d'état de trafic pour la voie d'intersection ; et

l'ajustement de la première quantité de changement en utilisant la première quantité d'ajustement, de manière à obtenir une deuxième quantité de changement.

8. Procédé selon la revendication 7, dans lequel l'ajustement de la première quantité de changement en utilisant la première quantité d'ajustement, de manière à obtenir une deuxième quantité de changement comprend au moins un élément parmi : si le signal d'éclairage actuel est le signal lumineux vert, la soustraction de la première quantité d'ajustement à la première quantité d'augmentation pour obtenir une deuxième quantité d'augmentation ; et si le signal d'éclairage actuel est le signal lumineux rouge, la soustraction de la première quantité d'ajustement de la première quantité de diminution pour obtenir une deuxième quantité de diminution.

9. Procédé selon la revendication 6, dans lequel l'ajustement de la première information de changement sur la base de l'information d'état de trafic pour la voie d'intersection et de l'information d'état de trafic pour la voie au niveau de laquelle se situe le véhicule cible comprend :

la détermination d'une première quantité d'ajustement sur la base de l'information d'état de trafic pour la voie d'intersection ;

la détermination d'une deuxième quantité d'ajustement sur la base de l'information d'état de trafic pour la voie au niveau de laquelle se situe le véhicule cible ; et

l'ajustement de la première quantité de changement en utilisant la première quantité d'ajustement et la deuxième quantité d'ajustement, de manière à obtenir une deuxième quantité de changement.

10. Procédé selon l'une quelconque des revendications précédentes, comprenant en outre :
la détermination d'un véhicule candidat, parmi au moins deux véhicules candidats, qui atteint le premier la ligne d'arrêt, en tant que véhicule cible, en réponse au fait que les au moins deux véhicules candidats se situent dans une zone prédéterminée entourant l'intersection.

11. Dispositif électronique (700), comprenant :

au moins un processeur ; et

une mémoire connectée de façon communicante au au moins un processeur, dans lequel la mémoire stocke des instructions exécutables par le au moins un processeur, et les instructions, lorsqu'elles sont exécutées par le au moins un processeur, amènent le au moins un processeur à mettre en oeuvre le procédé selon l'une quelconque des revendications 1 à 10.

12. Support de stockage non transitoire lisible par ordinateur sur lequel sont stockées des instructions informatiques, dans lequel les instructions informatiques, lorsqu'elles sont exécutées par un processeur, amènent un ordinateur à mettre en oeuvre le procédé selon l'une quelconque des revendications 1 à 10.

13. Dispositif routier, comprenant le dispositif électronique selon la revendication 11.

14. Produit de programme informatique contenant un programme informatique, dans lequel le programme informatique, lorsqu'il est exécuté par un processeur, amène le processeur à mettre en oeuvre le procédé selon l'une quelconque des revendications 1 à 10.

**FIG. 1**

<u>200</u>

A pre-estimated driving duration for a target vehicle from a current position to a stop line of an intersection is acquired ⟋⌐ S210

A first change information for traffic lights at the intersection is determined based on the pre-estimated driving duration ⟋⌐ S220

A traffic status information for an intersecting lane that intersects a lane at which the target vehicle is located is acquired ⟋⌐ S230

The first change information is adjusted based at least on the traffic status information for the intersecting lane, to obtain a second change information, in response to the traffic status information meeting a preset status condition, so as to control the traffic lights based on the second change information ⟋⌐ S240

**FIG. 2**

$G_1$    $G_2$    $G_{n-m+1}$    $G_{n-2}$    $G_{n-1}$    $G_n$

•C    •C    . . .    •C    . . .    •C    •C    •C

m

**FIG. 3**

$G_n$

401

C

**FIG. 4A**

402

C

H

L

W

**FIG. 4B**

504

501

503

502

**FIG. 5**

600

Duration acquisition module 610

Change determination module 620

Status acquisition module 630

Change adjusting module 640

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015371538 A1